Europäisches Patentamt

(19) European Patent Office

Office européen des brevets

(11) Numéro de publication : **0 181 244**
**B1**

(12) **FASCICULE DE BREVET EUROPÉEN**

(45) Date de publication du fascicule du brevet :
**27.07.88**

(21) Numéro de dépôt : **85401960.1**

(22) Date de dépôt : **08.10.85**

(51) Int. Cl.⁴ : **G 01 G   3/15, B 61 B 12/06**

(54) Dispositif de pesage des pinces, notamment d'une télécabine ou d'un télésiège débrayable.

(30) Priorité : **15.10.84 FR 8415868**

(43) Date de publication de la demande :
**14.05.86 Bulletin 86/20**

(45) Mention de la délivrance du brevet :         ,
**27.07.88 Bulletin 88/30**

(84) Etats contractants désignés :
**AT CH DE GB IT LI SE**

(56) Documents cités :
**EP-A- 0 056 919**
**FR-A- 2 200 141**
**FR-A- 2 249 792**
**FR-A- 2 449 011**
**US-A- 3 638 497**
**US-A- 4 008 457**
**US-A- 4 294 320**

(73) Titulaire : **POMAGALSKI S.A.**
**11, rue René Camphin**
**F-38600 Fontaine (FR)**

(72) Inventeur : **Tarassoff, Serge**
**9, rue Laurent Darves**
**F-381170 Seyssinet (FR)**

(74) Mandataire : **Kern, Paul**
**206, Cours de la Libération**
**F-38100 Grenoble (FR)**

## Description

L'invention est relative à une installation de transport à câble aérien, notamment télésiège ou télécabine débrayable, ayant des pinces d'accouplement des charges au câble susceptibles d'être débrayées du câble dans les stations, chaque pince étant dotée d'un ressort de fermeture et d'un levier de commande d'ouverture et de fermeture de la pince, coopérant dans les zones d'embrayage et (ou) de débrayage avec une rampe s'étendant le long de la trajectoire de déplacement de la pince.

L'adhérence d'une pince sur le câble est fonction de la pression de serrage de la pince et on mesure la force du ressort de fermeture par déplacement du levier de commande de la pince. Les systèmes connus à vérin et à détecteur de fin de course sont difficiles à régler et d'une fiabilité limitée.

Le but de la présente invention est de permettre la réalisation d'un système de pesage des pinces plus performant et plus facile d'emploi.

L'installation selon l'invention est caractérisée en ce qu'une partie de ladite rampe présente une certaine flexibilité et qu'un détecteur de proximité coopère avec ladite partie flexible pour mesurer l'amplitude de la déformation élastique au passage d'une pince sous l'action de la force d'appui dudit levier de commande sur la rampe.

La structure métallique, en l'occurrence la rampe, est soumise à l'effort du levier de commande de la pince en cours de fermeture ou d'ouverture et cet effort est directement proportionnel ou égal à la force du ressort. La déformation élastique de cette structure et plus particulièrement de la partie flexible de la rampe, est mesurée par un détecteur de proximité qui fournit un signal analogique de tension proportionnel à la distance rampe/capteur et à la force du ressort. Le contrôle est effectué automatiquement au passage de la pince sur la rampe, par exemple au cours de la fermeture de la pince, après débrayage de la pince du câble. On utilise ainsi la rampe usuelle de commande pour effectuer le contrôle, cette rampe pouvant d'ailleurs être celle de la zone d'embrayage ou de débrayage de la pince ou une rampe spéciale, disposée sur la trajectoire de déplacement de la pince en station. Il est clair qu'avant et après le passage de la pince la déformation est nulle, le signal émis ayant la valeur zéro. Ce signal augmente avec l'avancement de la pince pour atteindre une valeur maximale, lorsque la pince arrive au milieu de la partie flexible où est disposé le détecteur de proximité.

Un traitement électronique approprié du signal du détecteur permet un affichage et une alarme fidèle, lorsque la force de serrage est inférieure à un seuil prédéterminé. La rampe à partie flexible est constituée par un profilé en T, dont la semelle forme la face d'appui du levier de commande, en particulier du galet porté par l'extrémité libre de ce levier. La liaison entre la jambe et la semelle est interrompue sur une longueur suffisante à une flexibilité de cette partie de la semelle. Cette interruption résulte d'une entaille qui sépare la partie flexible de la semelle de la tranche de la jambe et dont la largeur est supérieure à la déformation maximale. La jambe placée de chant constitue un ensemble rigide de support fixé à la charpente de l'installation.

Le signal de tension, émis par le détecteur de proximité inductif, est amplifié et mis en forme pour être appliqué à un multiplexeur relié à un convertisseur pour transformer le signal de tension en un signal de fréquence proportionnelle à la force du ressort. La sortie du convertisseur est reliée à un ou plusieurs compteurs qui reçoivent un signal de temps d'une horloge. Le compteur est interrogé cycliquement par un microprocesseur, qui détermine la valeur maximale et compare cette valeur à un seuil affiché pour déclencher une alarme si la valeur est trop faible ou sinon valider la pince et réaliser un affichage. D'autres avantages et caractéristiques ressortiront plus clairement de la description qui va suivre d'un mode de mise en œuvre de l'invention, donné à titre d'exemple non limitatif et représenté aux dessins annexés, dans lesquels :

la figure 1 est une vue schématique en élévation d'un dispositif de contrôle selon l'invention ;

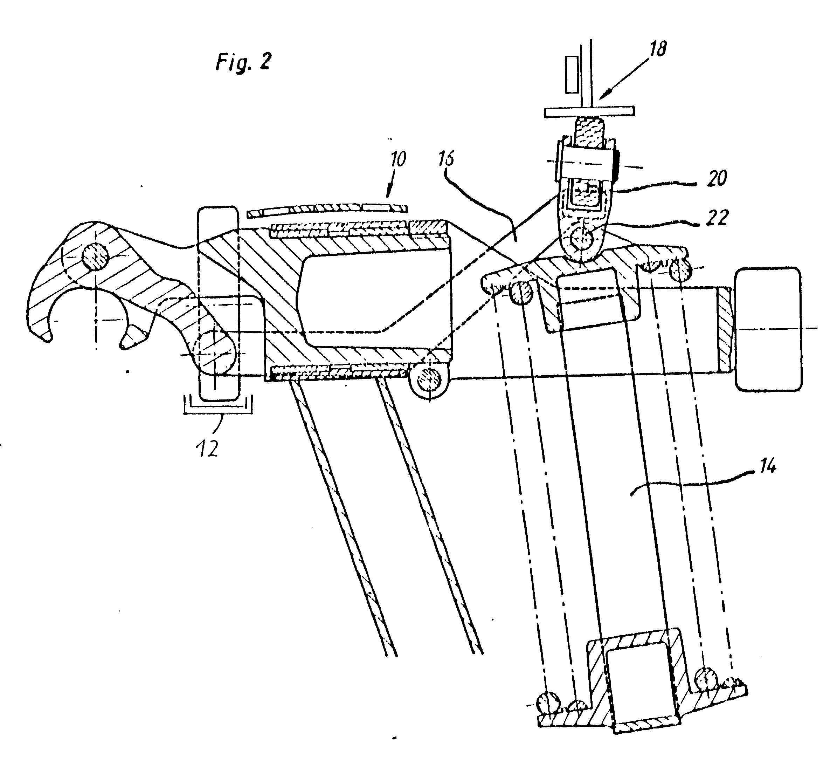

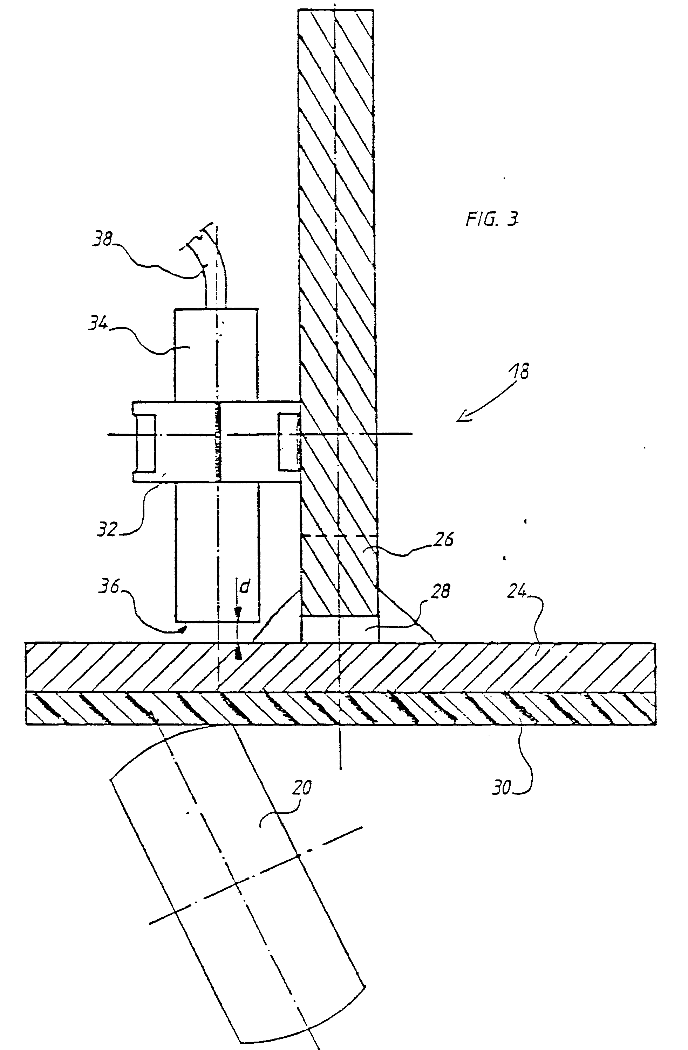

la figure 2 est une vue en coupe suivant la ligne II-II de la figure 1 ;

la figure 3 est une vue à échelle agrandie et en coupe du détecteur de proximité ;

la figure 4 est le schéma synoptique du circuit électronique de traitement ;

la figure 5 est l'organigramme.

Sur les figures une pince 10 d'un télésiège débrayable, télécabine ou analogue roule dans la station sur un rail 12 en étant désaccouplée du câble. La pince 10 comporte un ressort 14 sollicitant la pince en position de fermeture et un levier de commande 16 portant un galet 20, susceptible de coopérer avec une rampe 18 s'étendant le long du rail 12 sur les tronçons de commande d'ouverture et de fermeture de la pince 10. Le ressort 14 est articulé sur un axe 22, porté par l'extrémité du levier 16 au droit du galet 20 et il est facile de voir que la force exercée par la rampe 18 sur le galet 20 équilibre la force du ressort 14 ou selon le type de pince est proportionnelle à la force du ressort. Le ressort 14 fournit la force de serrage de la pince sur le câble et cette force est proportionnelle à celle du ressort 14. Une telle installation est bien connue et par exemple décrite dans le brevet français N° 24 97 750 (EP-AI-56 919).

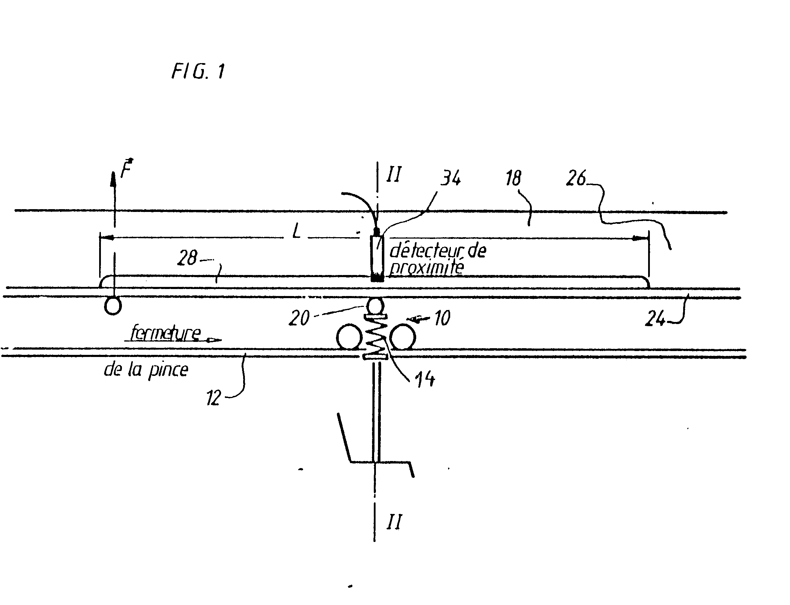

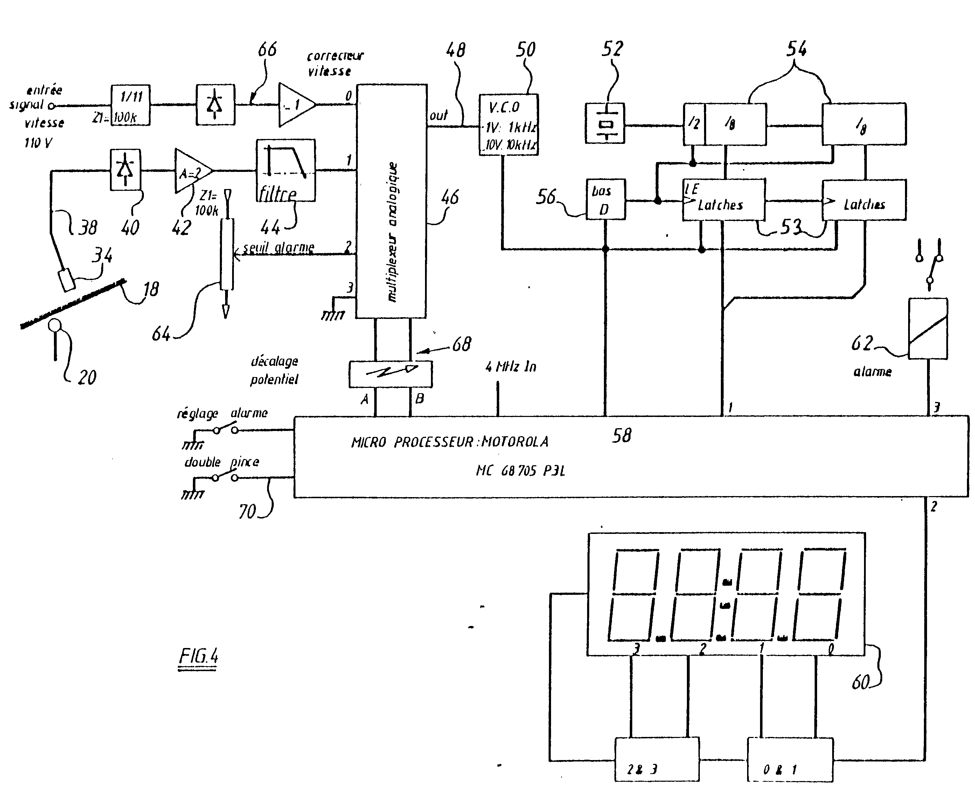

En se référant aux figures 1 et 3 on voit que la rampe 18, constituée par un profilé en T renversé, comporte une semelle 24 sensiblement horizontale et une jambe 26 verticale. L'interface de jonction entre la jambe 26 et la semelle 24 présente, sur un tronçon de la rampe 18, une entaille 28, pratiquée à la base de la jambe 26, qui sépare la semelle 24 de la jambe. L'entaille 28 peut être prise sur la semelle 24, dont l'épaisseur est dans ce cas réduite ou être répartie entre la jambe 26 et la semelle 24. Sur la longueur du tronçon la semelle 24 est maintenue par les extrémités et sa faible épaisseur lui confère une certaine élasticité. Le profilé 18 est métallique, la semelle 24 portant un revêtement antifriction 30 sur la face coopérant avec le galet 20. La jambe 26, qui travaille de chant, constitue une pièce rigide de support de la semelle 24, elle-même fixée à l'ossature de la station qui porte le rail 12.

A la jambe 26 est assujetti, par exemple par un collier 32, un détecteur de proximité 34 de forme générale cylindrique, dont la face 36 frontale de mesure est disposé en regard de la semelle 24 à une distance d du côté opposé au galet 20. Le détecteur 34 du type inductif comporte une bobine (non représentée) dont l'inductance varie avec la distance d. On comprend qu'une flexion de la semelle 24 sous l'action de la force d'appui du galet 20 diminue l'intervalle d, ce dernier revenant par élasticité à la position initiale après le passage du galet 20 sur le tronçon 1. Le détecteur 34 émet un signal proportionnel à la distance d et de ce fait proportionnel à la force de serrage de la pince et ce signal est transmis par des câbles 38 à une unité électronique de traitement. Le détecteur de proximité 34 peut être d'un type différent, de tels détecteurs étant bien connus des spécialistes.

Des essais ont montré que la précision de la mesure est largement suffisante pour le contrôle des pinces, seule une faible dérive étant à prendre en compte lors de l'exploitation du signal.

La figure 4 montre le schéma synoptique de l'unité de traitement du signal émis par le détecteur 34. Le signal analogique de tension est transmis par les câbles 38 à un bloc de protection 40 et après amplification et mise en forme dans des blocs 42, 44 appliqué à une entrée 1 d'un multiplexeur analogique 46 dont la sortie 48 est reliée à un convertisseur 50 qui engendre un signal de fréquence proportionnelle au signal de tension. Le signal de fréquence est appliqué à une unité de compteurs 54, par l'intermédiaire de relais de verrouillage 56. Les compteurs 54 sont pilotés par une horloge 52 et dotés d'un bloc 56 de remise à zéro.

Le port 1 d'un microprocesseur 58, par exemple du type MC 68705 P3L commercialisé par la société MOTOROLA, est relié aux compteurs 54 pour interroger cycliquement les compteurs. Les ports 2 et 3 de sortie du microprocesseur 58 sont reliés respectivement à un système d'affichage 60 et à une alarme 62.

Un bloc d'affichage 64 d'un seuil d'alarme est relié à l'entrée 2 du multiplexeur 46, qui peut éventuellement recevoir sur l'entrée 0 un signal de correction (en vitesse, par exemple), qui permet de tenir compte de l'influence de l'inertie lors d'un défilement des pinces à grande vitesse. Le signal de correction de vitesse est élaboré dans un circuit de mise en forme 66 recevant à l'entrée un signal représentatif de la vitesse des pinces. Le multiplexeur 46 est relié au microprocesseur 58 par des connexions 68 transmettant les informations de seuil et de vitesse.

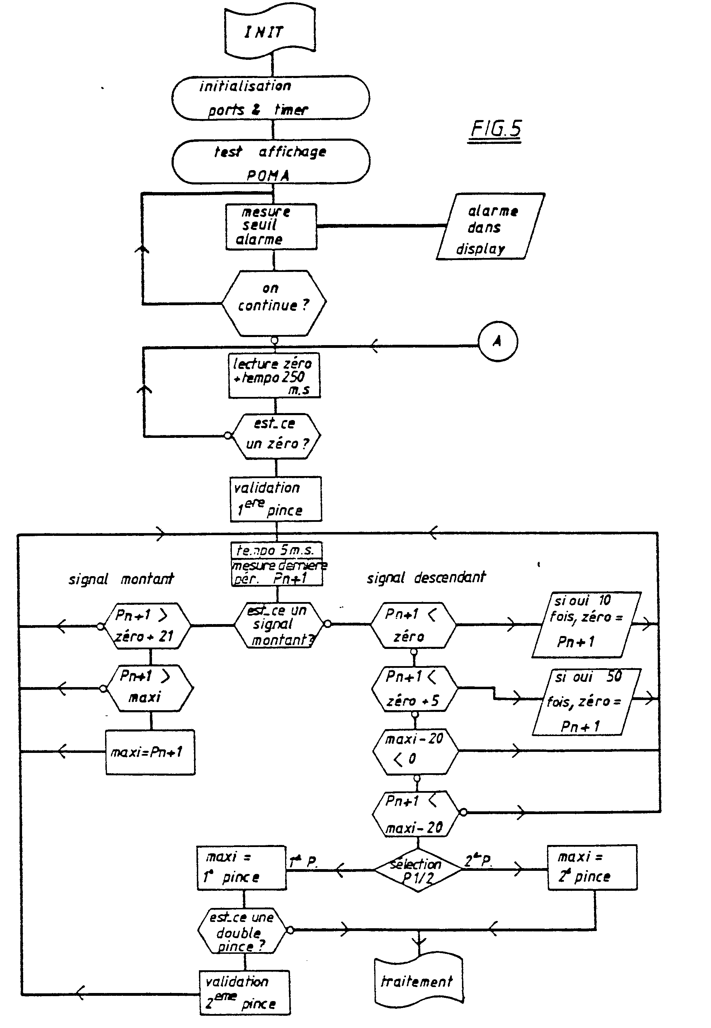

La figure 5 représente l'organigramme qui ne sera que brièvement résumé. Il faut initialiser le microprocesseur 58 et effectuer un test. On lit ensuite le seuil d'alarme, qu'on affiche et si l'alarme est correctement réglée on continue. Ces opérations préliminaires sont effectuées uniquement à la mise sous tension. On effectue une première mesure en l'occurrence une lecture des compteurs 54 et on vérifie si elle correspond à un zéro, sinon on recommence, jusqu'à la lecture d'un zéro qui est affiché. Après validation de la première pince l'analyse du signal par comparaison au signal de la précédente lecture permet de différencier un signal montant d'un signal descendant. Tant que le signal est montant on décrit la boucle de gauche (sur la figure 5) d'attente de la valeur maximale et dès que le signal devient descendant on décrit la boucle de droite, le signal qui correspond à l'amplitude maximale étant transmis par le circuit de droite, après vérification, pour la comparaison du signal à la valeur de seuil avec affichage de la valeur maximale et déclenchement d'une alarme si le seuil n'est pas franchi.

La boucle de gauche du signal montant effectue une comparaison du signal à la valeur maximale enregistrée préalablement, en mémorisant la nouvelle valeur maximale si le signal dépasse l'ancienne valeur.

La boucle de droite du signal descendant analyse le signal pour vérifier si le zéro retenu au départ était bien un zéro, c'est-à-dire la valeur minimale de la mesure (vérifiée 10 fois avant validation) ou une valeur à peine supérieure (vérifiée 50 fois avant validation), de façon à maîtriser toute dérive de cette valeur.

Le zéro et donc en conséquence la valeur maximale sont ainsi ajustés en permanence pour compenser toute dérive dans le temps et la mesure est parfaitement fiable et précise.

Dans les installations ayant des chariots d'accouplement des véhicules à deux pinces, ces dernières passent, en étant légèrement décalées, sur le tronçon de mesure 1 et les mesures doivent tenir compte de cette influence réciproque par une discrimination appropriée. A cet effet, un signal 70, de double pince, peut être transmis à l'un des ports du microprocesseur 58 pour modifier le programme et faire la distinction entre la première et la deuxième pince. Ces adaptations ne changent pas le mode de fonctionnement du dispositif de mesure selon l'invention.

L'invention n'est pas limitée au mode de mise en œuvre décrit, notamment au mode de traitement et d'exploitation du signal, mais elle s'étend à toutes les modifications mises en œuvre selon les revendications.

Le dispositif peut être utilisé au pesage de véhicules en mouvement en inversant la position du capteur, mais un tel dispositif n'est pas revendiqué.

**Revendications**

1. Installation de transport à câble aérien, notamment télésiège ou télécabine débrayable, ayant des pinces (10) d'accouplement des charges au câble susceptibles d'être débrayées du câble dans les stations, chaque pince (10) étant dotée d'un ressort (14) de fermeture et d'un levier (16) de commande d'ouverture de la pince, coopérant dans les zones d'embrayage et (ou) de débrayage avec une rampe (18) s'étendant le long de la trajectoire de déplacement de la pince, caractérisée en ce qu'une partie (24) de ladite rampe (18) présente une certaine flexibilité et qu'un détecteur (34) de proximité coopère avec ladite partie flexible (24) pour mesurer l'amplitude de la déformation élastique au passage d'une pince sous l'action de la force d'appui dudit levier de commande sur la rampe.

2. Installation selon la revendication 1, caractérisée en ce que ledit détecteur (34) du type inductif comprend un bobinage fixe disposé en regard de ladite partie flexible (24) en un matériau ferreux, une déformation de la partie flexible provoquant une variation de l'écartement (d) et de l'inductance de la bobine.

3. Installation selon la revendication 1 ou 2, caractérisée en ce que ladite rampe (18) est un profilé en forme de T comportant une semelle (24) et une jambe 26, la force d'action du levier (16) de commande s'exerçant perpendiculairement sur la semelle (24) dont une partie est montée flexible sur la jambe (26) du T, ladite force étant appliquée de chant sur la jambe (26) qui constitue un support rigide de fixation dudit détecteur (34).

4. Installation selon la revendication 3, caractérisée en ce qu'une entaille (28) est ménagée dans la zone de jonction entre la semelle (24) et ladite jambe (26) sur un tronçon (1) de la rampe (18) pour réaliser ladite partie flexible de la semelle, susceptible de se déformer par flexion par rapport à la jambe au passage d'une pince (10), la partie fixe du détecteur (34) étant disposée en regard de la semelle (24) déformable pour déterminer un intervalle d'épaisseur (d) variable lors d'une déformation de la semelle.

5. Installation selon la revendication 1, 2, 3 ou 4, caractérisée en ce que ladite rampe (18) est disposée dans la zone de commande de fermeture de la pince (10).

6. Installation selon l'une des revendications précédentes caractérisée en ce que ledit détecteur (34) comporte un circuit électronique d'élaboration d'un signal de tension proportionnel à la déformation de ladite partie flexible (24) de la rampe (18).

7. Installation selon la revendication 6, caractérisée en ce que le signal analogique de tension est appliqué à une entrée d'un multiplexeur analogique (46) relié à un convertisseur (50) qui transforme le signal de tension en un signal de fréquence transmis à un compteur (54) piloté par une horloge (52), ledit compteur étant interrogé périodiquement.

8. Installation selon la revendication 7, caractérisée en ce qu'elle comporte un microprocesseur (58) relié d'une part audit compteur (54) et d'autre part audit multiplexeur (46) ce dernier recevant d'un dispositif d'affichage (64) une valeur de seuil, ledit microprocesseur interrogeant cycliquement le compteur (58) et le multiplexeur (46) pour déterminer la valeur maximale du signal et comparer cette valeur à la valeur de seuil pour déclencher une alarme lors du non franchissement de ce seuil, ou valider le bon état de la pince en cas de franchissement.

9. Installation selon la revendication 8, caractérisée en ce que le microprocesseur (58) analyse le signal fourni par le compteur (54) et le compare à la lecture précédente pour différencier un signal montant d'un signal descendant et déterminer la valeur maximale lors de l'apparition d'un signal descendant à la suite d'un signal montant, et ce sans information extérieure complémentaire.

10. Installation selon la revendication 8 ou 9 caractérisée en ce que le microprocesseur commande l'affichage numérique de la force de serrage de la pince.

**Claims**

1. Aerial ropeway transport installation, notably a detachable chair lift or gondola lift, having coupling grips (10) of the loads to the rope and detachable from the rope in the stations, each grip (10) having a closing spring (14) and an operating lever (16) which cooperates in the coupling and (or) uncoupling sections with a ramp (18) extending along the grip moving path, characterized in that a part (24) of said ramp (18) has a certain flexibility and that a proximity detector (34) cooperates with said flexible part (24) to measure the amplitude of the deformation when the grip passes due to the action of the force exerted by said operating lever on the ramp.

2. Installation according to claim 1, characterized in that said inductive type detector (34) comprises a fixed coil disposed facing said flexible part (24) made of ferrous material, a deformation of the flexible part causing a variation of the clearance (d) and of the inductance of the coil.

3. Installation according to claim 1 or 2, characterized in that said ramp (18) is a T-shaped profil having a base (24) and an upright (26), the actuating force of the operating lever (16) being exerted perpendicularly on the base (24) a part of which is mounted flexibly on the upright (26) of the T, said force being applied edgeways on the upright (26) which constitutes a rigid support for fixing said detector (34).

4. Installation according to claim 3, characterized in that a notch (28) is made in the junction area between the base (24) and said upright (26) over a section (1) of the ramp (18) to achieve said flexible part of the base, which can be deformed by flexion in relation to the upright when a grip (10) passes, the fixed part of the detector (34) being disposed facing the deformable base (24) to determine a clearance of variable thickness (d) when the base is deformed.

5. Installation according to claim 1, 2, 3 or 4, characterized in that said ramp (18) is located in the area controlling closing of the grip (10).

6. Installation according to any of the preceding claims, characterized in that said detector (34) comprises an electronic circuit generating a voltage signal proportional to the deformation of said flexible part (24) of the ramp (18).

7. Installation according to claim 6, characterized in that the analog voltage signal is applied to an input of an analog multiplexer (46) connected to a converter (50) which transforms the voltage signal into a frequency signal transmitted to a timer (54) piloted by a clock (52), said timer being periodically requested to send information.

8. Installation according to claim 7, characterized in that a microprocessor (58) is connected on the one hand to said timer (54) and on the other hand to said multiplexer (46), the latter receiving a threshold value from a display device (64), said microprocessor (58) requesting the timer (54) and the multiplexer (46) to send information cyclically to determine the maximum value of the signal and to compare this value with the threshold value to trigger an alarm if this threshold is not reached, or to validate the correct status of the grip if the threshold is reached.

9. Installation according to claim 8, characterized in that the microprocessor (58) analyses the signal supplied by the timer (54) and compares it with the previous reading to differentiate between a rising signal and a descending signal and to determine the maximum value when a descending signal appears following a rising signal, without any additional external information.

10. Installation according to claim 8 or 9, characterized in that the microprocessor controls the digital display of the grip clamping force.

**Patentansprüche**

1. Luftseilbahn, insbesondere abkuppelbare Sesselbahn oder Gondelbahn, mit Klemmen (10) zur Kupplung der Last am Seil, welche Klemmen bei der Stationseinfahrt entkuppelt werden, wobei jede Klemme (10) eine Schliessfeder (14) und einen Klemmenöffnungs-Steuerhebel (16) hat, welcher mit einer längs der Klemmenbewegungsbahn in der Kuppel- und (oder) Entkuppelstrecke laufenden Schiene (18) zusammenwirkt, dadurch gekennzeichnet, dass ein Teil (24) dieser Schiene (18) eine gewisse Flexibilität hat, und dass ein Nähedetektor (34) mit diesem flexiblen Teil (24) zur Messung der Grösse der elastischen Verformung, bei der Klemmendurchfahrt, unter der Druckkraft vom genannten Steuerhebel auf der Schiene zusammenwirkt.

2. Bahn gemäss Anspruch 1, dadurch gekennzeichnet, dass der genannte induktivartige Detektor (34) eine gegenüber dem genannten flexiblen Eisenteil (24) feststehende Spule (24) aufweist, wobei die Verformung des flexiblen Teiles eine Änderung des Abstandes (d) und der Spuleninduktivität bewirkt.

3. Bahn nach Anspruch 1 oder 2, dadurch gekennzeichnet, dass die genannte Schiene (18) ein T-förmiges Profileisen ist mit einer Sohle (24) und einem Steg (26), wobei die Steuerkraft des Steuerhebels senkrecht auf die Sohle (24) wirkt, von der ein Teil flexibel auf dem Steg (26) des T's befestigt ist und wobei die genannte Kraft auf die Schmalseite des Steges (26) wirkt, welcher einen steifen Befestigungsträger des genannten Detektors (34) bildet.

4. Bahn nach Anspruch 3, dadurch gekennzeichnet, dass ein Einschnitt (28) in der Verbindungszone der Sohle (24) und des Steges (26) auf einem Schienenabschnitt (1) vorgesehen ist, um den genannten flexiblen Sohlenteil zu bilden, welcher sich bei der Durchfahrt einer Klemme (10) gegenüber dem Steg verbiegen kann, und wobei das feststehende Teil des Detektors (34) gegenüber der verformbaren Sohle (24) steht, um einen Spalt zu bilden, dessen Dicke (d) sich bei Verformung der Sohle ändert.

5. Bahn nach Anspruch 1, 2, 3 oder 4, dadurch gekennzeichnet, dass die genannte Schiene (18) auf der Schliess-Steuerstrecke der Klemme (10) aufgestellt ist.

6. Bahn nach einem der vorigen Ansprüche, dadurch gekennzeichnet, dass der genannte Detektor (34) einen elektronischen Stromkreis aufweist zur Bildung eines Spannungssignals proportional zu der Verformung des genannten flexiblen Teiles (24) der Schiene (18).

7. Bahn nach Anspruch 6, dadurch gekennzeichnet, dass das analogische Spannungssignal am Eingang eines analogischen Multiplexers (46) angelegt ist, der mit einem Umformer (50) verbunden ist, um das Spannungssignal in ein Frequenzsignal umzuwandeln, welches Frequenzsignal einem durch eine Uhr (52) gesteuerten Zähler (54) zugeführt wird, wobei der genannte Zähler periodisch befragt wird.

8. Bahn nach Anspruch 7, dadurch gekennzeichnet, dass sie einen Mikroprozessor (58) aufweist, der einerseits mit dem genannten Zähler (54) und andererseits mit dem genannten Multiplexer (46) verbunden ist, wobei letzterer von einer Anzeigevorrichtung (64) einen Schwellenwert empfängt und der genannte Mikroprozessor zyklisch den Zähler (58) und den Multiplexer (46) zur Bestimmung des Signal-Höchstwertes befragt, um diesen Höchstwert mit dem Schwellenwert zu vergleichen und einen Alarm auszulösen, wenn dieser Schwellenwert nicht überschritten wird, oder den guten Klemmenzustand beim Überschreiten zu bestätigen.

9. Bahn nach Anspruch 8, dadurch gekennzeichnet, dass der Mikroprozessor (58) das von dem Zähler abgegebene Signal untersucht und mit der früheren Ablesung vergleicht, um ein steigendes Signal von einem absinkenden Signal zu unterscheiden und den Höchstwert bei Auftreten eines sinkenden Signals nach einem steigenden Signal zu bestimmen, und das ohne zusätzliche äussere Angabe.

10. Bahn nach Anspruch 8 oder 9, dadurch gekennzeichnet, dass der Mikroprozessor die digitale Anzeige der Klemmenschliesskraft steuert.

FIG. 1

détecteur de proximité

fermeture de la pince

Fig. 2

0 181 244

FIG. 3

FIG.4

entrée
signal
vitesse
110 V

1/11
Z1=100k

correcteur
vitesse
66

.1

A=2
Z1=100k

filtre
44

38   40   42

34

18

20

seuil alarme

64

multiplexeur analogique
46

48   out

V.C.O
.1V: 1kHz
.10V: 10kHz
50

56   bas
D

LE
Latches

Latches
53

52

/2   /8

/8
54

décalage
potentiel
68

A   B

4 MHz In

58

62
alarme

réglage  alarme

double  pince

70

MICRO PROCESSEUR : MOTOROLA
MC 68705 P3L

3   2   1   0

2 & 3   0 & 1

60

0 181 244

**0 181 244**

FIG.5